# EUROPÄISCHE PATENTSCHRIFT

(11) **EP 0 434 955 B1**
(45) Veröffentlichungstag und Bekanntmachung des Hinweises auf die Patenterteilung: **30.03.1994**
(21) Anmeldenummer: 90121720.8
(22) Anmeldetag: 13.11.1990
(51) Int. Cl.: B01D 53/34, B01D 53/36

(54) **Verfahren zur Reinigung von Alkylenoxid enthaltendem Abgas und Vorrichtungen zur Durchführung des Verfahrens**
Method and apparatus for purifying exhaust gases containing alkylene oxid
Procédé et dispositif pour purifier des gaz d'échappement contenant de l'oxyde d'alkyle

(30) Priorität: 24.11.1989 DE 3938954; 27.06.1990 DE 4020480
(43) Veröffentlichungstag der Anmeldung: 03.07.1991
(73) Patentinhaber: GEA Wiegand GmbH, D-76275 Ettlingen (DE)
(72) Erfinder: Koch, Andreas, Dr., W-7501 Marxzell/Schielberg (DE); Arzt, Bernhard, Dr.-Ing., W-6744 Kandel (DE)
(74) Vertreter: Fincke, Karl Theodor, Dipl.-Phys. Dr.

(56) Entgegenhaltungen:
- DE-A- 2 333 574
- US-A- 4 813 410
- US-A- 4 828 810

## Beschreibung

Die Erfindung betrifft ein Verfahren zur Reinigung von Alkylenoxid, insbesondere Ethylenoxid, enthaltendem Abgas und Vorrichtungen zur Durchführung des Verfahrens, bei denen das Alkylenoxid in einer wäßrigen Flüssigkeit absorbiert und anschließend mit Hilfe eines Katalysators zu (Poly)glykol umgesetzt wird.

Verfahren dieser Art sind nach der DDR-C-155 586 und der US-A-4 112 054 bekannt.

Bei diesen Verfahren dienen als Katalysatoren Säuren oder Laugen. Diese Katalysatoren sind nur schwer von den entstehenden (Poly)glykolen trennbar und werden deshalb meist verworfen, sobald die (Poly)glykolkonzentration in ihnen ein bestimmtes Höchstmaß übersteigt.

Aus "Perry's Chemical Engineers' Handbook", Robert H. Perry, Don Green; 6. Aufl, S. 18-19 und 18-20, sind Füllkörperwäscher bekannt.

Aus der DE-A-2333574 ist ein Rohr zur Aufnahme eines Ionenaustauschers bekannt.

Aufgabe der Erfindung ist es, einen Katalysator anzugeben, der ohne erhebliche Schwierigkeiten von den entstehenden (Poly)glykolen trennbar ist. Die Lösung dieser Aufgabe ist im Kennzeichen des Anspruchs 1 angegeben.

Bei diesem Verfahren werden bevorzugt diejenigen wäßrigen Flüssigkeiten zur Absorption des Alkylenoxids verwendet, die in den Ansprüchen 2 bis 4 angegeben sind.

Bei Verwendung der in Anspruch 4 angegebenen wäßrigen Flüssigkeit kann das Verfahren im Kreislauf durchgeführt werden.
Bevorzugt ist der Ionenaustauscher gemäß Anspruch 5 und/oder 6 ausgebildet.

Erstaunlicherweise scheinen flüssige oder makroporöse Ionenaustauscher meist ungeeignet zu sein. Für die besondere Eignung gelförmiger Ionenaustauscher sind vermutlich Adsorptions- und Diffusionsvorgänge im Gel verantwortlich, die die Katalyse der Umsetzung des Alkylenoxids zu (Poly)glykol fördern.

Vorzugsweise wird der Ionenaustauscher so ausgewählt, daß die Bedingungen des Anspruchs 7 erfüllt sind.

Besonders bewährt haben sich Ionenaustauscher nach Anspruch 8, dabei besonders Acrylderivate und Polystyrol.

Besonders haben sich dabei Ionenaustauscher mit den Merkmalen des Anspruchs 9 bewährt.

Einen besonders hohen Wirkungsgrad erhält man bei der Durchführung des Verfahrens gemäß Anspruch 10.Dabei sollte die Temperatur im Ionenaustauscher um 2 - 8°C, gegebenenfalls auch um mehr als 8°C, höher sein als die Temperatur beim Absorbieren.

Um dies zu begünstigen, wird das Verfahren bevorzugt gemäß Anspruch 11 und/oder gemäß Anspruch 12 durchgeführt.

Bei üblichen Absorptionstemperaturen von zum Beispiel 20° bis 40°C kann ein Teil der Reaktionsprodukte nicht aus dem Ionenaustauscher, insbesondere wenn dieser harzförmig ist, diffundieren. Außerdem findet u. U. eine Halbesterbildung mit Sulfonsäuregruppen statt, die die aktiven Zentren des Ionenaustauschers blockiert. Die entstehenden Halbester können jedoch bei erhöhter Temperatur, zum Beispiel oberhalb 45°C, gespalten werden. Höhere Temperaturen begünstigen diese Halbesterspaltung und einen Stofftransport aus dem Inneren des Ionenaustauschers nach außen. Die Anwesenheit der Glykole und Halbester als Reaktionsprodukte bewirkt außerdem eine Veränderung des Bettvolumens des Ionenaustauschers um z.B. 40 % bei niedrig vernetzten, harzförmigen Ionenaustauschern, da durch eine geänderte Polarität eine Wasserverdrängung aus dem Ionenaustauscher und damit eine Volumenreduzierung des Ionenaustauschers eintritt. Hierdurch werden die Porendurchmesser im harzförmigen Ionenaustauscher kleiner und der Transport des Alkylenoxids, insbesondere des Ethylenoxids, zu den reaktiven Zentren, den Sulfonsäuregruppen, im Inneren des harzförmigen Ionenaustauschers erschwert. Bei stärker vernetzten, harzförmigen Ionenaustauschern ist die Veränderung des Bettvolumens geringe,r jedoch ergeben sich auch hier vergleichbare Desaktivierungen des Ionenaustauschers.

Um diese Mängel zu beheben, ist das Verfahren bevorzugt gemäß Anspruch 13 ausgebildet. Anspruch 13 führt zu einer vollständigen Reaktivierung des Ionenaustauschers. Erfolgt die Regenerierung zwischen 60 und 80°C, so sind hierzu gegebenenfalls mehrere Stunden erforderlich.

Zur Absorption hat sich besonders eine Absorptionsvorrichtung gemäß Anspruch 14 als geeignet erwiesen.

Der Ionenaustauscher wird bevorzugt gemäß Anspruch 15 untergebracht.

Um eine thermische Regenerierung des Ionenaustauschers zu ermöglichen, ist bevorzugt eine Ausbildung gemäß Anspruch 16 vorgesehen.

Um einen besonders hohen Umsatz und daher ein besonders reines Abgas zu erzielen, ist die Vorrichtung bevorzugt gemäß Anspruch 17 ausgebildet.

Eine besonders einfache Steuerung mehrerer Füllkörperwäscher gestattet dabei die Ausbildung der Vorrichtung gemäß Anspruch 18.

Die Erfindung wird im folgenden anhand von Ausführungsbeispielen unter Hinweis auf die beigefügten Zeichnungen beschrieben.

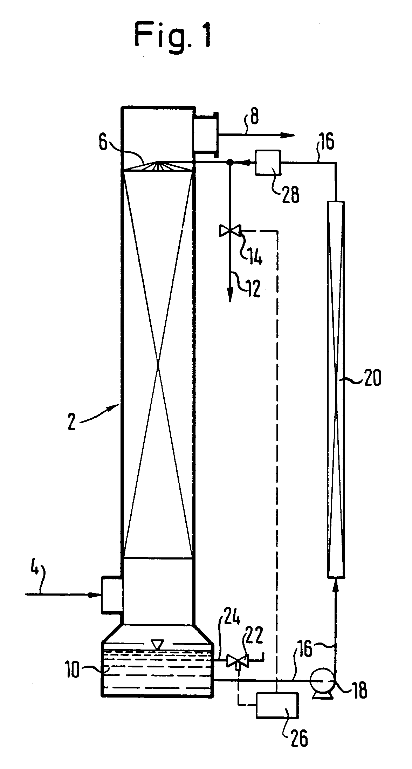

Die Figuren 1 bis 6 zeigen unterschiedliche Ausbildungen von Vorrichtungen zur Durchführung des Verfahrens. In den Figuren sind gleiche bzw. gleichartige Bauteile durch Addition eines ganzzahligen Hunderters gekennzeichnet.

Die Vorrichtung nach Fig. 1 meist einen Füllkörperwäscher 2 auf, dem unten über eine Leitung 4 ethylenoxidhaltiges Abgas, z.B. aus Sterilisationskammern eines Krankenhauses, zugeführt wird. In dem Füllkörperwäscher 2 steigt das Abgas auf und wird dabei von einer aus einem Verteiler 6 austretenden, das Ethylenoxid absorbierenden, wäßrigen Flüssigkeit ausgewaschen, um dann von dem Ethylenoxid im wesentlichen gereinigt aus einer Leitung 8 am Kopf des Füllkörperwäschers auszutreten.

In dem Füllkörperwäscher 2 sammelt sich die das Ethylenoxid absorbiert enthaltende Flüssigkeit in einem Sumpf 10. Die Flüssigkeit wird aus dem Sumpf 10 durch eine Leitung 16, in der sich in Stromrichtung hintereinander eine Pumpe 18, ein den Ionenaustauscher enthaltendes, vertikales Ionenaustauschrohr 20 und ein Kühler 28 befinden, dem Verteiler 6 zugeführt. Oberhalb der Leitung 16 mündet in dem Sumpf 10 eine ein Ventil 22 enthaltende Leitung 24 zur Zuführung von Frischwasser.

Zwischen dem Kühler 28 und dem Verteiler 6 wird die das Ethylenoxid absorbiert enthaltende Flüssigkeit durch eine Leitung 12 abgeführt, in der sich ein Ventil 14 befindet.

Eine Zeitsteuerung 26 steuert das Ventil 22 zur Zuführung von Frischwasser und das Ventil 14 zur Abführung der Flüssigkeit.

Ersichtlich wird in dieser Vorrichtung die der Absorption dienende Flüssigkeit im Kreislauf geführt. Dies kann kontinuierlich oder diskontinuierlich geschehen. Zugeführt wird nur Wasser. Der als Katalysator zu verwendende Ionenaustauscher muß, wenn überhaupt, nur selten erneuert werden.

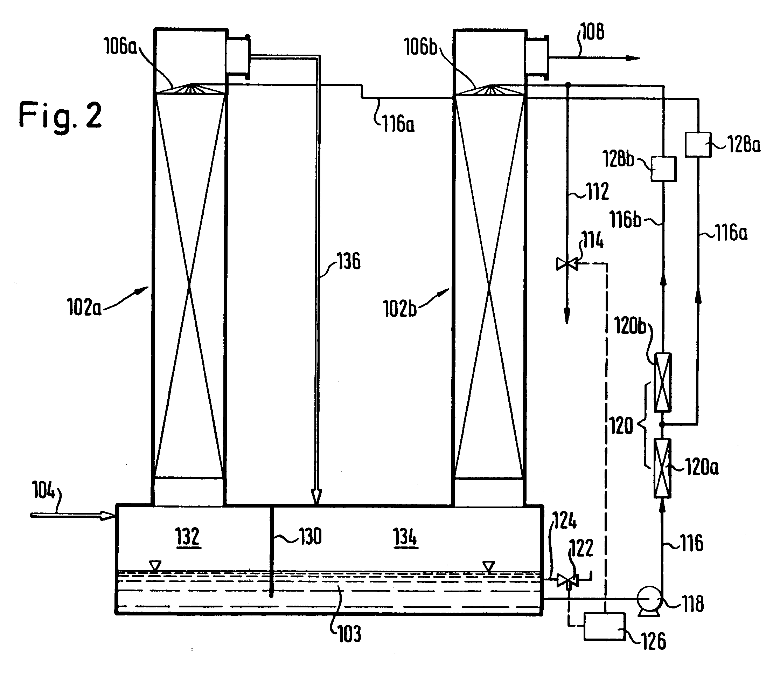

Die Vorrichtung nach Fig. 2 unterscheidet sich im wesentlichen von der Vorrichtung nach Fig. 1 dadurch, daß bei ihr zwei hintereinandergeschaltete Füllkörperwäscher 102a und 102b vorgesehen sind, die unterhalb ihrer durch eine Trennwand 130 getrennten Gasräume 132, 134 einen gemeinsamen Sumpf 103 aufweisen, und daß das Ionenaustauschrohr in zwei Abschnitte 120a und 120b unterteilt ist.

Das Abgas gelangt durch eine Leitung 104 in den Füllkörperwäscher 102a und von dort über eine Leitung 136 in den Füllkörperwäscher 102b, bevor es gereinigt aus der Leitung 108 abströmt. Die aus dem in Stromrichtung ersten Abschnitt 120a des Ionenaustauschrohrs austretende Flüssigkeit wird über eine Leitung 116a dem Verteiler 106a im Füllkörperwäscher 102a zugeführt. Die aus dem zweiten Abschnitt 120b des Ionenaustauschrohrs austretende Flüssigkeit wird über eine Leitung 116b dem Verteiler 106b in dem zweiten Füllkörperwäscher 102b zugeführt. In den Leitungen 116a und 116b befinden sich zwischen den Abschnitten 120a und 120b und den Verteilern 106a und 106b Kühler 128a und 128b.

Die Vorrichtung nach Fig. 2 eignet sich besonders, wenn die Ethylenkonzentration im Abgas sehr groß ist.

Die Trennwand 130 ist selbstverständlich so gestaltet, daß kein Gas aus dem Gasraum 132 in den Gasraum 134 strömen kann, jedoch ein gemeinsamer Sumpf 103 besteht.

Die Beschickung der Verteiler 106a und 106b über die Leitungen 116a und 116b erfolgt unter dem Gesichtspunkt, daß die Ethylenkonzentration in der Leitung 116b kleiner ist als in der Leitung 116a und die Ethylenkonzentration in der Leitung 116a kleiner ist als in der Leitung 116, d.h. im Sumpf 103.

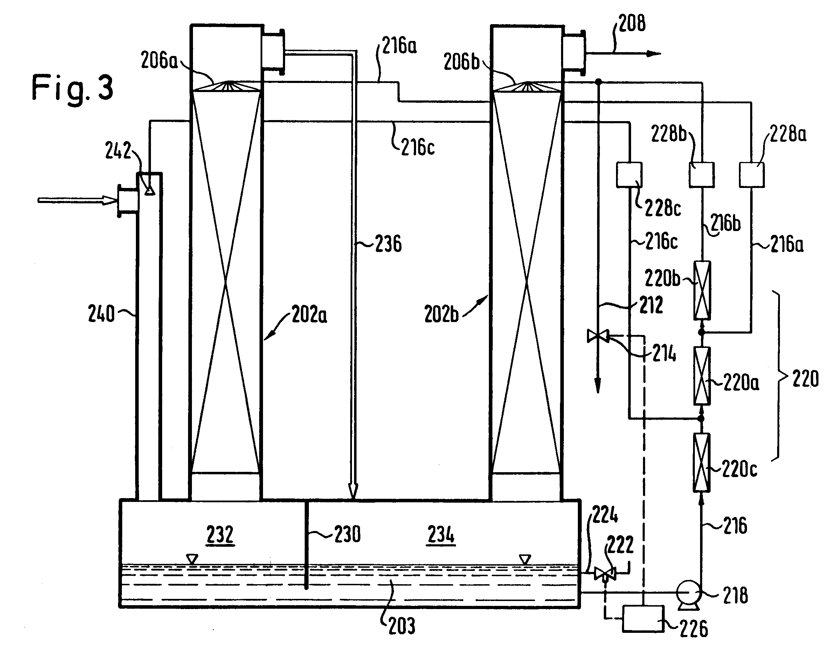

Die Vorrichtung nach Fig. 3 unterscheidet sich von der Vorrichtung nach Fig. 2 im wesentlichen dadurch, daß dem ersten Füllkörperwäscher 202a ein Strahlwäscher 240 vorgeschaltet ist und dementsprechend das Ionenaustauschrohr 220 in drei Abschnitte 220a, 220b und 220c unterteilt ist, wobei der Abschnitt 220c in Stromrichtung vor dem Abschnitt 220a liegt und die aus diesem Abschnitt 220c ausgetretene Flüssigkeit über eine Leitung 216c einer Düse 242 in Strahlwäscher 240 zugeführt wird. Dabei ist auch in der Leitung 216c ein Kühler 228c vorgesehen

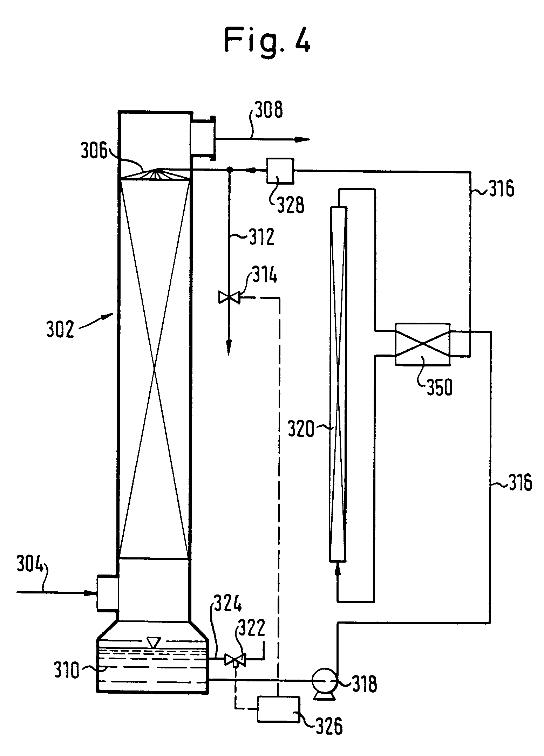

Die Vorrichtung nach Fig. 4 unterscheidet sich von der Vorrichtung nach Fig. 1 im wesentlichen dadurch, daß derjenige Abschnitt der Leitung 316, der zu dem Ionenaustauschrohr 320 geführt ist, mit demjenigen Abschnitt der Leitung 316, der von dem Ionenaustauschrohr 320 abgeführt ist, über einen Wärmetauscher 350 im Wärmetausch steht, um die eingangs erläuterte Erwärmung der dem Ionenaustauschrohr 320 zugeführten Flüssigkeit zu erhalten.

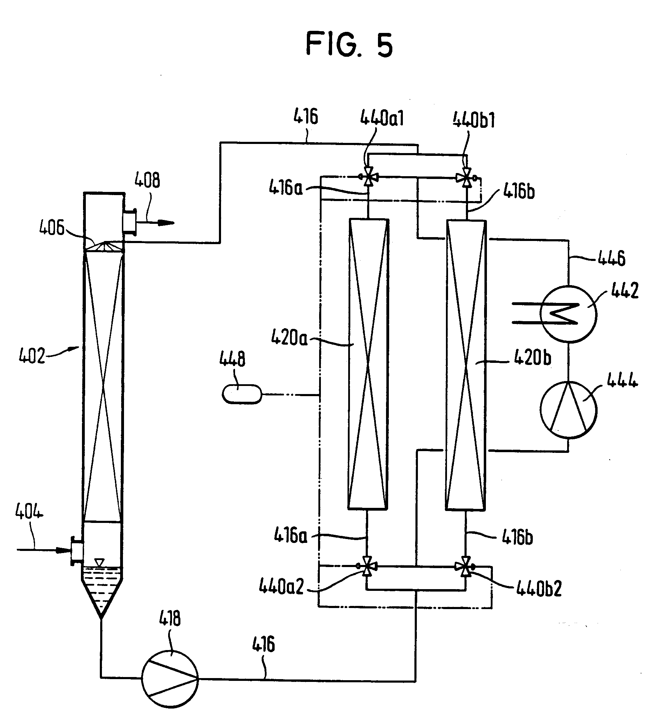

Die Ausführungsform der Vorrichtung nach Fig. 5 unterscheidet sich von den bisher beschriebenen in wesentlichen dadurch, daß zwei parallel geschaltete Ionenaustauscher enthaltende Rohre 420a und 420b vorgesehen sind, zu denen die Leitung 416 in Zweige 416a und 416b aufgeteilt ist. In diesen Zweigen 416a und 416b befinden sich stromaufwärts und stromabwärts der Rohre 420a, 420b Stellventile 440a1, 440a2, 440b1 und 440b2, die paarweise mit einer durch eine Heizvorrichtung 442 und eine Pumpe 444 führenden Leitung 446 verbunden sind. Mittels eines zentralen Stellsignalgebers 448 sind die Stellventile 440a1, 440a2, 440b1, 440b2 so zu verstellen, daß wahlweise die Flüssigkeit aus dem Füllkörperwäscher 402 durch das Rohr 420a oder das Rohr 420b strömt, während der Ionenaustauscher im jeweils anderen Rohr 420b oder 420a mittels Durchlauferhitzerflüssigkeit regeneriert wird.

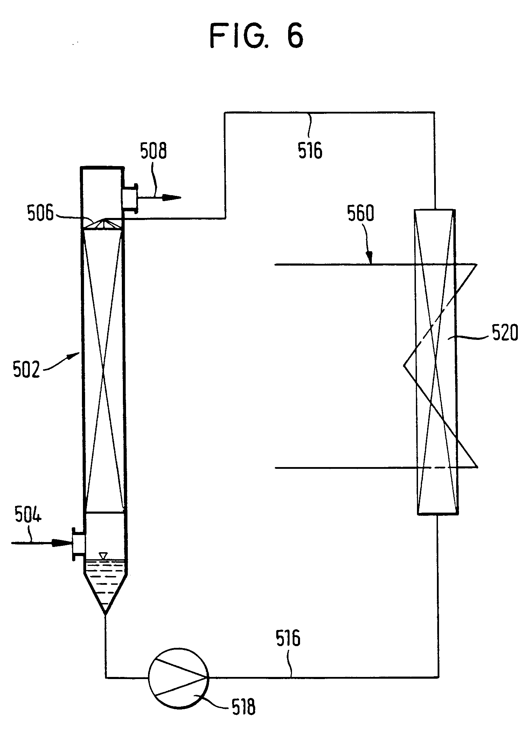

Die Ausführungsform der Vorrichtung nach Fig. 6 unterscheidet sich von den vorangehend beschriebenen Ausführungsformen im wesentlichen dadurch, daß das den Ionenaustauscher enthaltende Rohr 520 mit einem Heizrohr 560 zur Regenerierung des Ionenaustauschers im Rohr 520 umschlossen ist.

## Patentansprüche

1. Verfahren zur Reinigung von Alkylenoxid, insbesondere Ethylenoxid, enthaltendem Abgas, bei dem das Alkylenoxid in einer wäßrigen Flüssigkeit absorbiert und anschließend mit Hilfe eines Katalysators zu (Poly)glykol umgesetzt wird,
**dadurch gekennzeichnet,**
daß als Katalysator ein Ionenaustauscher aus einem Polymer mit sauren oder basischen Gruppen verwendet wird.

2. Verfahren nach Anspruch 1, dadurch gekennzeichnet, daß die wäßrige Flüssigkeit entionisiertes Wasser enthält.

3. Verfahren nach Anspruch 1 oder 2, dadurch gekennzeichnet, daß die wäßrige Flüssigkeit eine (Poly)glykollösung enthält.

4. Verfahren nach einem der vorstehenden Ansprüche, dadurch gekennzeichnet, daß als wäßrige Flüssigkeit wenigstens einen Teil des Ablaufs aus dem Ionenaustauscher verwendet wird.

5. Verfahren nach einem der vorstehenden Ansprüche, dadurch gekennzeichnet, daß der Ionenaustauscher stark sauer ist.

6. Verfahren nach einem der vorstehenden Ansprüche, dadurch gekennzeichnet, daß der Ionenaustauscher gelförmig ist.

7. Verfahren nach einem der vorstehenden Ansprüche, dadurch gekennzeichnet, daß der Aktivitätskoeffizient des Alkylenoxids in bezug zum Ionenaustauscher kleiner ist als in bezug zu der wäßrigen Flüssigkeit.

8. Verfahren nach einem der vorstehenden Ansprüche, dadurch gekennzeichnet, daß das Molekülgerüst des Ionenaustauschers das eines organischen Polymers ist.

9. Verfahren nach einem der vorstehenden Ansprüche, dadurch gekennzeichnet, daß der Ionenaustauscher eine Sulfonsäuregruppe oder Phosphonsäuregruppe in einer Konzentration von 0,7 bis 2 Mol/l aufweist.

10. Verfahren nach einem der vorstehenden Ansprüche, dadurch gekennzeichnet, daß die Temperatur im Ionenaustauscher beim Umsetzen der das Alkylenoxid enthaltenden Flüssigkeit - bevorzugt um mindestens 2 bis 8°C - höher gehalten wird als die Temperatur der wäßrigen Flüssigkeit beim Absorbieren des Alkylenoxids.

11. Verfahren nach einem der Ansprüche 4 bis 9, dadurch gekennzeichnet, daß der Ablauf des Ionenaustauschers gekühlt wird, bevor er zur Absorption des Alkylenoxids verwendet wird.

12. Verfahren nach einem der vorstehenden Ansprüche, dadurch gekennzeichnet, daß mittels der den Ionenaustauscher verlassenden Flüssigkeit die in den Ionenaustauscher eintretende Flüssigkeit erwärmt wird.

13. Verfahren nach einem der vorstehenden Ansprüche, dadurch gekennzeichnet, daß der Ionenaustauscher thermisch bei Temperaturen zwischen 45°C und 120°C, vorzugsweise bei Temperaturen zwischen 60°C und 80°C, regeneriert wird.

14. Vorrichtung zur Durchführung des Verfahrens nach Anspruch 1, gekennzeichnet durch
- einen Füllkörperwäscher oder Strahlwäscher (2; 102a, 102b; 202a, 202b; 302; 402; 502) zur Absorption von Alkylenoxid in der wäßrigen Flüssigkeit,
- ein einen Ionenaustauscher aus einem Polymer mit sauren oder basischen Gruppen enthaltendes Rohr (20; 120; 220; 320; 420a, 420b; 520),
- eine Leitung (16; 116, 116a, 116b; 216, 216a, 216b; 316; 416, 416a, 416b; 516) für die wäßrige Flüssigkeit, die den Füllkörperwäscher oder Strahlwäscher (2; 102a, 102b; 202a, 202b; 302; 402; 502) mit dem Rohr (20; 120; 220; 320; 420a, 420b; 520) verbindet.

15. Vorrichtung nach Anspruch 14, gekennzeichnet durch ein 1 bis 6 m langes Rohr (20; 120; 220; 320; 420a, 420b; 520) zur Aufnahme des Ionenaustauschers.

16. Vorrichtung nach einem der Ansprüche 14 und 15, dadurch gekennzeichnet, daß der Ionenaustauscher mit einer Heizvorrichtung (350; 442; 560) versehen ist.

17. Vorrichtung nach einem der Ansprüche 14 bis 16, dadurch gekennzeichnet, daß der Ionenaustauscher in eine der Anzahl der Stufen zur Absorption von Alkylenoxid in der wäßrigen Flüssigkeit entsprechende Anzahl von hintereinander geschalteten Abschnitten (120a, 120b; 220a, 220b, 220c) unterteilt ist und daß jeweils der Auslauf des in Strömungsrichtung der Flüssigkeit n'ten Abschnitts mit dem Einlauf der in Strömungsrichtung der Flüssigkeit n'ten Stufe verbunden ist.

18. Vorrichtung nach einem der Ansprüche 14 bis 17, dadurch gekennzeichnet, daß mehrere Stufen zur Absorption von Alkylenoxid in der wäßrigen Flüssigkeit einen gemeinsamen Sumpf (103; 203) aufweisen.

## Claims

1. A process for purifying waste gas containing an alkylene oxide, more particularly ethylene oxide, in which process the alkylene oxide is absorbed in an aqueous fluid and then converted into (poly) glycol using a catalyst, characterised in that an ion exchanger consisting of a polymer with acidic or alkaline groups is used as catalyst.

2. A process according to claim 1, characterised in that the aqueous fluid contains de-ionised water.

3. A process according to either claim 1 or 2, characterised in that the aqueous fluid contains a (poly) glycol solution.

4. A process according to any one of the preceding claims, characterised in that at least a part of the discharge from the ion exchanger is used as the aqueous fluid.

5. A process according to any one of the preceding claims, characterised in that the ion exchanger is strongly acidic.

6. A process according to any one of the preceding claims, characterised in that the ion exchanger is in the form of a gel.

7. A process according to any one of the preceding claims, characterised in that the activity coefficient of the alkylene oxide is smaller with respect to the ion exchanger than with respect to the aqueous fluid.

8. A process according to any one of the preceding claims, characterised in that the molecular structure of the ion exchanger is that of an organic polymer.

9. A process according to any one of the preceding claims, characterised in that the ion exchanger is a sulphonic acid group or phosphoric acid group in a concentration of 0.7 to 2 mol/l.

10. A process according to any one of the preceding claims, characterised in that during the reaction of the fluid containing the alkylene oxide the temperature in the ion exchanger is kept higher, preferably by at least 2 to 8°C, than the temperature of the aqueous fluid when absorbing the alkylene oxide.

11. A process according to any one of claims 4 to 9, characterised in that the discharge from the ion exchanger is cooled before being used to absorb alkylene oxide.

12. A process according to any one of the preceding claims, characterised in that the fluid entering the ion exchanger is heated by means of the fluid leaving the ion exchanger.

13. A process according to any one of the preceding claims, characterised in that the ion exchanger is thermally regenerated at temperatures between 45°C and 120°C, preferably at temperatures between 60°C and 80°C.

14. A device for carrying out the process according to claim 1, characterised by
- a packed washer or jet washer (2; 102a, 102b; 202a, 202b; 302; 402; 502) for absorbing alkylene oxide in an aqueous fluid,
- a tube containing an ion exchanger consisting of a polymer with acidic or alkaline groups (20; 120; 220; 320; 420a, 420b; 520),
- a pipeline (16; 116, 116a, 116b; 216; 216a, 216b; 316; 416, 416a, 416b; 516) for the aqueous fluid which connects the packed washer or jet washer (2; 102a, 102b; 202a, 202b; 302; 402; 502) with the tube (20; 120; 220; 320; 420a, 420b; 520).

15. A device according to claim 14, characterised by a 1 to 6 m long tube (20; 120; 220; 320; 420a, 420b; 520) for receiving the ion exchanger.

16. A device according to any one of claims 14 and 15, characterised in that the ion exchanger is provided with a heating device (350; 442; 560).

17. A device according to any one of claims 14 to 16, characterised in that the ion exchanger is divided into a number of successively connected portions (120a; 120b; 220a; 220b, 220c), corresponding to the number of stages for absorbing alkylene oxide in the aqueous fluid, and that the outlet of each portion in the fluid flow direction is connected with the inlet of the stage in the fluid flow direction.

18. A device according to any one of claims 14 to 17, characterised in that several stages for absorbing alkylene oxide in the aqueous fluid, have a joint sump (103; 203).

## Revendications

1. Procédé de purification de gaz résiduaires contenant de l'oxyde d'alkylène et, en particulier, de gaz résiduaires contenant de l'oxyde d'éthylène, dans lequel l'oxyde d'alkylène est absorbé dans un liquide aqueux et est transformé ensuite en polyglycol à l'aide d'un catalyseur, caractérisé en ce qu'on utilise comme catalyseur un échangeur d'ions constitué d'un polymère avec des groupes acides ou basiques.

2. Procédé selon la revendication 1, caractérisé en ce que le liquide aqueux contient de l'eau déminéralisée.

3. Procédé selon la revendication 1 ou 2, caractérisé en ce que le liquide aqueux contient une solution de polyglycol.

4. Procédé selon l'une des revendications précédentes, caractérisé en ce que l'on utilise comme liquides aqueux au moins une partie du liquide sortant de l'échangeur d'ions.

5. Procédé selon l'une des revendications précédentes, caractérisé en ce que l'échangeur d'ions est fortement acide.

6. Procédé selon l'une des revendications précédentes, caractérisé en ce que l'échangeur d'ions est sous forme de gel.

7. Procédé selon l'une des revendications précédentes, caractérisé en ce que le coefficient d'activité de l'oxyde d'alkylène est plus faible par rapport à l'échangeur d'ions que par rapport au liquide aqueux.

8. Procédé selon l'une des revendications précédentes, caractérisé en que la charpente moléculaire de l'échangeur d'ions est formé d'un polymère organique.

9. Procédé selon l'une des revendications précédentes, caractérisé en ce que l'échangeur d'ions présente un groupe d'acide sulfonique ou un groupe d'acide phosphonique, avec une concentration de 0,7 à 2 moles par litre.

10. Procédé selon l'une des revendications précédentes, caractérisé en ce que la température dans l'échangeur d'ions pour la conversion du liquide contenant l'oxyde d'alkylène, est supérieure de préférence d'au moins 2 à 8°C à la température du liquide aqueux servant à l'absorption de l'oxyde d'alkylène.

11. Procédé selon l'une des revendications 4 à 9, caractérisé en que le liquide sortant de l'échangeur d'ions est refroidi avant d'être utilisé pour l'absorption de l'oxyde d'alkylène.

12. Procédé selon l'une des revendications précédentes, caractérisé en ce que le liquide quittant l'échangeur d'ions sert à réchauffer le liquide pénétrant dans l'échangeur d'ions.

13. Procédé selon l'une des revendications précédentes, caractérisé en ce que l'échangeur d'ions est régénéré thermiquement à des températures entre 45°C et 120°C et, de préférence, à des température entre 60°C et 80°C.

14. Dispositif pour mettre en oeuvre le procédé selon la revendication 1, caractérisé par:
- un laveur à garnissage ou un laveur à jet (2; 102a, 102b; 202a, 202b; 302; 402; 502) pour l'absorption de l'oxyde d'alkylène dans le liquide aqueux;
- un tube (20, 120; 220; 320; 420a, 420b; 520) contenant un échangeur d'ions formé d'un polymère avec des groupes acides ou basiques;
- une conduite (16; 116, 116a, 116b; 216, 216a, 216b; 316; 416, 416a, 416b; 516) pour le liquide aqueux qui connecte le laveur à garnissage ou le laveur à jet (2; 102a, 102b; 202a, 202b; 302; 402; 502) avec le tube (20, 120; 220; 320; 420a, 420b; 520).

15. Dispositif selon la revendication 14, caractérisé par un tube de 1 à 6 m de longueur (20; 120; 220; 320; 420a, 420b; 520) destiné à contenir l'échangeur d'ions.

16. Dispositif selon l'une des revendications 14 et 15, caractérisé en ce que l'échangeur d'ions est pourvu d'un dispositif de chauffage (350; 442; 560).

17. Dispositif selon l'une des revendications 14 à 16, caractérisé en ce que l'échangeur d'ions est subdivisé en sections (120a, 120b; 220a, 20b, 220c) disposées l'une derrière l'autre et dont le nombre correspond au nombre d'étages de l'absorption de l'oxyde d'alkylène dans le liquide aqueux et que la sortie de la section d'ordre n dans la direction d'écoulement du liquide est connectée à l'entrée de l'étage d'ordre n dans la direction d'écoulement du liquide.

18. Dispositif selon l'une des revendications 14 à 17, caractérisé en ce que plusieurs étages pour l'absorption de l'oxyde d'alkylène dans le liquide aqueux présentent une cuve de pied commune (103, 203).
